# EUROPÄISCHE PATENTANMELDUNG

(11) **EP 2 215 942 A1**
(43) Veröffentlichungstag der Anmeldung: **11.08.2010**
(21) Anmeldenummer: 10151126.9
(22) Anmeldetag: 19.01.2010
(51) Int. Cl.: A47J 31/44

(54) **Vorrichtung zum Fördern von Milch**

(30) Priorität: 06.02.2009 DE 202009001491 U
(71) Anmelder: MELITTA HAUSHALTSPRODUKTE GmbH & Co. Kommanditgesellschaft, 32427 Minden (DE)
(72) Erfinder: Aus der Fünten, Sandra, 33739, Bielefeld (DE); Aengenheyster, Gerald, 32427, Minden (DE); Krutemeyer, Nils, 32278, Kirchlengern (DE)
(74) Vertreter: Dantz, Jan Henning

(57) **Zusammenfassung**

Eine Vorrichtung zum Fördern von Milch, insbesondere für Kaffeeautomaten, besitzt einen Milchbehälter (6), der über eine Leitung mit einer Düse (13) verbunden ist, eine Einrichtung (5) zur Erzeugung von heißem Dampf, mittels der an der Düse (13) heißer Milchschaum herstellbar ist, und einen Milchauslass (12), wobei zwischen dem Milchbehälter (6) und dem Milchauslass (12) eine Pumpe (8) zur Förderung kalter Milch angeordnet ist.

## Beschreibung

Die vorliegende Erfindung betrifft eine Vorrichtung zum Fördern von Milch, insbesondere für Kaffeeautomaten, mit einem Milchbehälter, der über eine Leitung mit einer Düse verbunden ist, einer Einrichtung zur Erzeugung von heißem Dampf, mittels der an der Düse heißer Milchschaum herstellbar ist, und einem Milchauslass.

Es sind Systeme zum Fördern von Milch bekannt, bei denen über eine Venturidüse Milch aus einem Milchbehälter angesaugt und durch die mit heißem Dampf betriebene Venturidüse gefördert wird. Dadurch kann heißer Milchschaum hergestellt werden und die Milch erhitzt werden. Zur Herstellung von Heißgetränken hat sich dieses System bewährt, allerdings ist es nicht möglich, kalte Milch zu fördern.

Aus der CH 684 627 ist eine Vorrichtung zur Erzeugung von Milchschaum bekannt, bei der erhitzte Milch mit hohem Druck durch ein Schäumelement gedrückt wird. Dadurch wird heißer Milchschaum hergestellt. Bei solchen Düsen besteht allerdings das Problem der Reinigung, da gerade milchführende Leitungen leicht verschmutzen können.

Für den Gastronomiebereich sind auch Getränkeautomaten bekannt, bei denen ein Milchbehälter in einem Kühlfach angeordnet ist und Milch über eine Pumpe gefördert werden kann. Solche für den Gastronomiebereich vorgesehene Geräte sind vergleichsweise teuer und für den Haushaltsbereich nicht einsetzbar.

Es ist daher Aufgabe der vorliegenden Erfindung eine Vorrichtung zum Fördern von Milch zu schaffen, die einfach aufgebaut ist und auch im Haushaltsbereich eingesetzt werden kann.

Diese Aufgabe wird mit einer Vorrichtung zum Fördern von Milch mit den Merkmalen des Anspruchs 1 gelöst.

Erfindungsgemäß umfasst die Vorrichtung zum Fördern von Milch sowohl einen Milchbehälter, der über eine Einrichtung zur Erzeugung von heißem Dampf gekoppelt ist, damit heißer Milchschaum bzw. heiße Milch herstellbar ist und zudem ist der Milchbehälter über eine Pumpe zur Förderung kalter Milch mit dem Milchauslass verbunden, so dass mit der Vorrichtung zum Fördern von Milch sowohl heiße als auch kalte Milch gefördert werden kann, was gerade bei der Herstellung von kalten kaffeehaltigen Getränken ein Vorteil ist. Denn in heißen Jahreszeiten werden zunehmend auch kaffeehaltige Kaltgetränke konsumiert, Die Vorrichtung ist einfach aufgebaut, da über den Milchbehälter wahlweise heiße oder kalte Milch gefördert wird und die Zahl der zu reinigenden Bauteile bzw. Leitungen auf ein Minimum begrenzt ist. Insbesondere können Milchbehälter und die Leitungen lösbar aneinander gehalten sein, so dass sich die Vorrichtung auf einfache Weise auseinandernehmen und reinigen lässt. Eine gesonderte Kühleinrichtung zum Kühlen des Milchbehälters ist nicht erforderlich, das der Milchbehälter nach der Benutzung entleert und gereinigt werden kann.

Gemäß einer bevorzugten Ausgestaltung der Erfindung ist eine manuelle oder automatische Steuerung vorgesehen, um wahlweise kalte oder heiße Milch oder Milchschaum am Milchauslass auszugeben. Dadurch ergibt sich ein hohes Maß an Flexibilität, so dass die Vorrichtung zum Fördern von Milch insbesondere mit einem Getränkeautomaten, insbesondere einem Kaffeeautomaten für den Haushaltsbereich kombiniert werden kann.

Vorzugsweise ist die Pumpe zwischen dem Milchbehälter und der Düse angeordnet. Dadurch kann die kalte Milch durch die Pumpe durch die Düse gedrückt werden. Die Pumpe kann dabei als Schlauchquetschpumpe ausgebildet sein, mittels der die Milch durch Verdrängung in einem Schlauch förderbar ist. Dadurch wird lediglich die Leitung mit Milch benetzt und entsprechend muss auch nur die Innenwand der Leitung nach dem Gebrauch gereinigt werden. Dies vereinfacht die Handhabung, da die Reinigung der Leitung durch Einspülen auf einfache Weise erfolgen kann.

Gemäß einer weiteren Ausgestaltung der Erfindung ist die Düse als Venturidüse ausgebildet, so dass Milch auch beim Herstellen von Heißdampf an der Venturidüse angesaugt werden kann.

Vorzugsweise ist ein Wassertank vorgesehen, der über die Einrichtung zur Erzeugung von heißem Dampf mit der Düse verbunden ist. Dabei kann zusätzlich eine Wasserpumpe zum Fördern von Wasser aus dem Wassertank vorgesehen sein, so dass eine Dosierung der zugeführten Wassermenge in heißer oder kalter Form bzw. als heißer Dampf auf leichte Weise dosiert werden kann.

Um die Konsistenz des Milchschaumes abhängig von der eingesetzten Milch gut einstellen zu können, ist vorzugsweise an der Düse eine einstellbare Zuführöffnung für Umgebungsluft vorgesehen. Dadurch kann Milchschaum mit hoher Qualität an der Düse hergestellt werden.

Die Erfindung wird nachfolgend anhand eines Ausführungsbeispieles mit Bezug auf die beigefügten Zeichnungen näher erläutert.

Es zeigen:
- Figur 1: ein Ablaufdiagramm der erfindungsgemäßen Vorrichtung zum Fördern von Milch;
- Figur 2: eine perspektivische Ansicht der Vorrichtung zum Fördern von Milch und

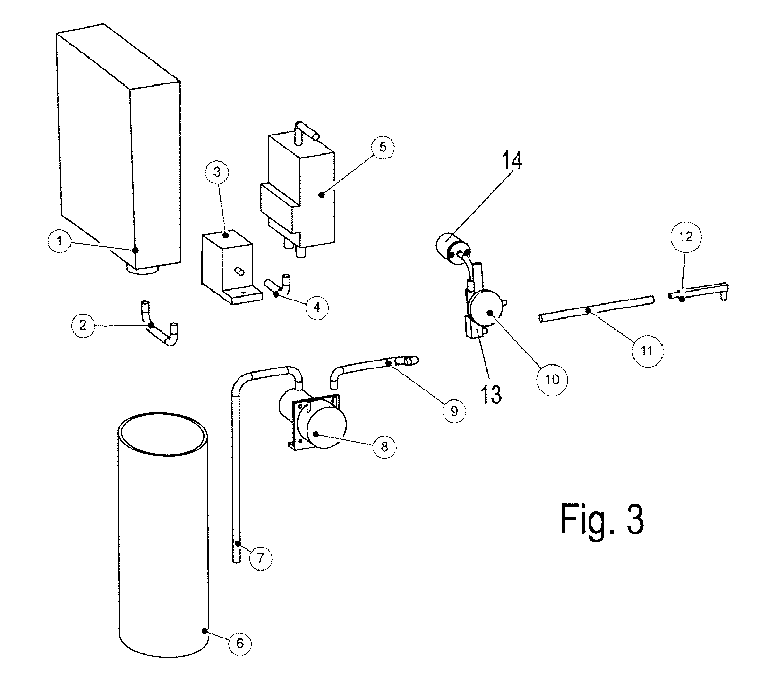

- Figur 3: eine Explosionsdarstellung der Einzelteile der Vorrichtung zum Fördern von Milch.

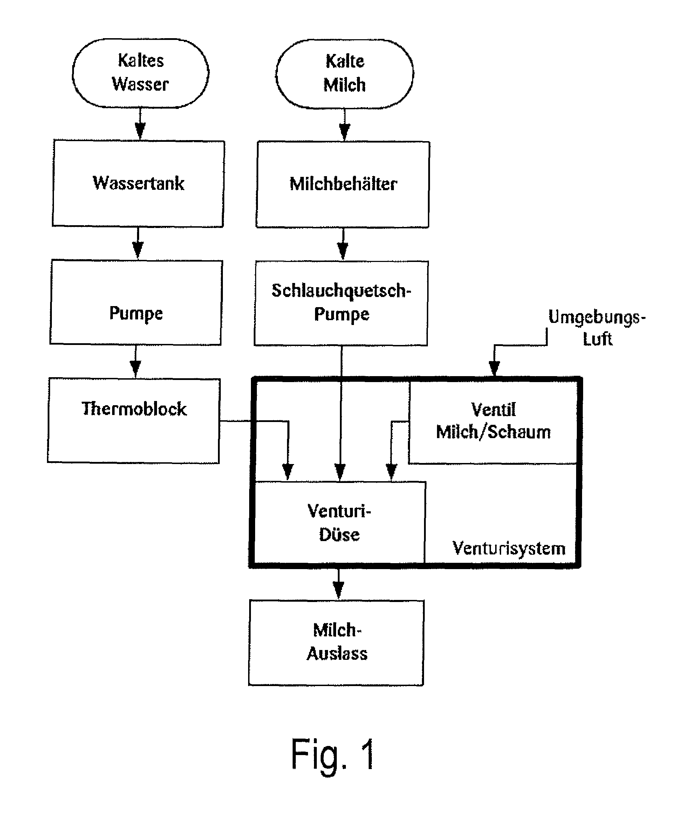

In Figur 1 ist ein Ablaufdiagramm der erfindungsgemäßen Vorrichtung zum Fördern von Milch dargestellt. Kaltes Wasser wird aus einem Wassertank über eine Pumpe zu einem Thermoblock gefördert, in dem das Wasser optional erhitzt werden kann, insbesondere zur Herstellung von heißem Dampf. Der heiße Dampf wird dann zu einer Düse, insbesondere einer Venturidüse, gefördert.

In einer zweiten Linie wird kalte Milch in einen Milchbehälter eingegeben, der über eine Leitung mit einer Schlauchquetschpumpe gekoppelt ist. Über die Schlauchquetschpumpe kann die kalte Milch zu der Düse gefördert werden.

Die Düse ist Bestandteil eines Venturisystems, in dem neben Wasser und Milch auch noch Umgebungsluft angesaugt und mit Milch bzw. Wasser gemischt werden kann.

An einem Milchauslass nach dem Venturisystem kann somit sowohl kaltes oder heißes Wasser, heißer Dampf, kalte Milch, heiße Milch oder heißer Milchschaum gefördert werden. Dies ermöglicht die Zubereitung einer großen Anzahl von Heiß- oder Kaltgetränken unter Beimengung von Milch. Die Vorrichtung zum Fördern von Milch wird insbesondere mit einem Kaffeeautomaten für den Haushaltsbereich kombiniert.

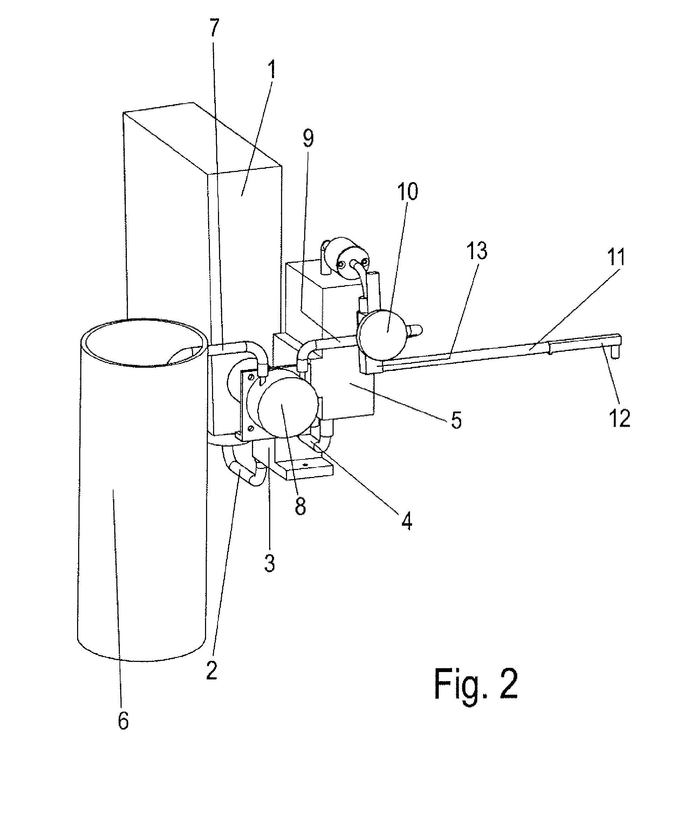

In Figur 2 ist die Vorrichtung zum Fördern von Milch dargestellt, die einen Wassertank 1 umfasst, der über eine Leitung 2 mit einer Wasserpumpe 3 verbunden ist. Die Wasserpumpe 3 kann kaltes Wasser aus dem Wassertank 1 zu einem Thermoblock 5 fördern, der über eine Leitung 4 mit der Wasserpumpe 3 verbunden ist. In dem Thermoblock 5 kann wahlweise das geförderte Wasser erhitzt werden oder zu heißem Dampf verarbeitet werden.

Zum Fördern von Milch ist ein Milchbehälter 6 vorgesehen, in dessen Bodenbereich ein Ende einer Leitung 7 angeordnet ist, die außerhalb des Behälters 6 mit einer Pumpe 8 zur Förderung kalter Milch verbunden ist. Die Pumpe 8 ist als Schlauchquetschpumpe ausgebildet und kann somit die Milch aus dem Behälter 6 fördern, ohne dass weitere Bauteile außer eine Leitung mit der Milch benetzt werden. Die Pumpe 8 ist über eine Leitung 9 mit einem Venturisystem 10 verbunden, das eine Düse 13, insbesondere eine Venturidüse aufweist. Von dem Venturisystem 10 wird die geförderte Milch bzw. der Milchschaum über eine Leitung 11 zu einem Milchauslass 12 gefördert. Die Düse 13 ist ferner über ein Kupplungsstück 14 mit dem Thermoblock 5 verbunden.

Wenn die Vorrichtung zum Fördern von Milch an einem Kaffeeautomaten eingesetzt wird, sind der Wassertank 1, die Pumpe 8 zur Förderung kalter Milch sowie die Wasserpumpe 3 und das Venturisystem 10 an dem Kaffeeautomaten angeordnet. Der Milchbehälter 6 ist lose neben dem Kaffeeautomaten an der Leitung 7 montiert, damit dieser leicht gereinigt werden kann. Zum Reinigen der Leitungen 7, 9 und 11 wird dann eine Reinigungsflüssigkeit durch die Leitungen 7, 9 und 11 gepumpt.

Mit der erfindungsgemäßen Vorrichtung zum Fördern von Milch lässt sich somit wahlweise kalte oder heiße Milch an dem Milchauslass 12 fördern. Ferner kann an der Venturidüse 13 auch Milchschaum hergestellt werden, wobei zur Dosierung der zugeführten Umgebungsluft eine einstellbare Zuführöffnung an der Venturidüse 13 vorgesehen sein kann.

## Patentansprüche

1. Vorrichtung zum Fördern von Milch, insbesondere für Kaffeeautomaten, mit einem Milchbehälter (6), der über eine Leitung mit einer Düse (13) verbunden ist, einer Einrichtung (5) zur Erzeugung von heißem Dampf, mittels der an der Düse (13) heißer Milchschaum herstellbar ist, und einem Milchauslass (12), **dadurch gekennzeichnet, dass** zwischen dem Milchbehälter (6) und dem Milchauslass (12) eine Pumpe (8) zur Förderung kalter Milch angeordnet ist.

2. Vorrichtung nach Anspruch 1, **dadurch gekennzeichnet, dass** eine manuelle oder automatische Steuerung vorgesehen ist, um wahlweise kalte oder heiße Milch oder Milchschaum am Milchauslass (12) auszugeben.

3. Vorrichtung nach Anspruch 1 oder 2, **dadurch gekennzeichnet, dass** die Pumpe (8) zwischen dem Milchbehälter (6) und der Düse (13) angeordnet ist.

4. Vorrichtung nach einem der Ansprüche 1 bis 3, **dadurch gekennzeichnet, dass** die Pumpe (8) als Schlauchquetschpumpe ausgebildet ist, mittels der die Milch durch Verdrängung in einem Schlauch förderbar ist.

5. Vorrichtung nach einem der Ansprüche 1 bis 4, **dadurch gekennzeichnet, dass** die Düse (13) als Venturidüse ausgebildet ist.

6. Vorrichtung nach einem der Ansprüche 1 bis 5, **dadurch gekennzeichnet, dass** ein Wassertank (1) vorgesehen ist, der über die Einrichtung (5) zur Erzeugung von Heißdampf mit der Düse (13) verbunden ist.

7. Vorrichtung nach Anspruch 6, **dadurch gekennzeichnet, dass** eine Wasserpumpe (3) zum Fördern von Wasser aus dem Wassertank (1) vorgesehen ist.

8. Vorrichtung nach einem der Ansprüche 1 bis 7, **dadurch gekennzeichnet, dass** an der Düse (13) eine einstellbare Zuführöffnung für Umgebungsluft vorgesehen ist.
